# EUROPÄISCHE PATENTSCHRIFT

(11) **EP 3 310 551 B1**
(45) Veröffentlichungstag und Bekanntmachung des Hinweises auf die Patenterteilung: **02.09.2020**
(21) Anmeldenummer: 16721776.9
(22) Anmeldetag: 03.05.2016
(51) Int. Cl.: B29C 49/06, B29C 49/42, B29C 49/12, B29C 49/46

(54) **FORMFÜLLMASCHINE**
MOULD FILLING MACHINE
MACHINE DE FORMAGE-REMPLISSAGE

(30) Priorität: 17.06.2015 DE 102015211136
(43) Veröffentlichungstag der Anmeldung: 25.04.2018
(73) Patentinhaber: Krones AG, 93073 Neutraubling (DE)
(72) Erfinder: WAGNER, Martin, 93073 Neutraubling (DE); DREGER, Kai-Uwe, 93073 Neutraubling (DE)
(74) Vertreter: Grünecker Patent- und Rechtsanwälte PartG mbB
(86) Internationale Anmeldenummer: PCT/EP2016/059935
(87) Internationale Veröffentlichungsnummer: WO 2016/202497

(56) Entgegenhaltungen:
- EP-A1- 2 295 324
- EP-A1- 2 930 138
- DE-A1-102011 011 076

## Beschreibung

Die vorliegende Erfindung betrifft eine Formfüllmaschine gemäß dem Oberbegriff des Anspruchs 1 und ein Verfahren zum Herstellen und Befüllen von Behältern mit einer Formfüllmaschine gemäß dem Oberbegriff des Anspruchs 8.

### Stand der Technik

Formfüllmaschinen werden bereits in der getränkeverarbeitenden Industrie genutzt. Ein Vorformling wird in eine dafür vorgesehene Form der Formfüllmaschine eingebracht und in dieser Form zu einem Behälter ausgeformt und befüllt. Dabei kann das Ausformen und Befüllen als ein einziger Prozessschritt stattfinden, sodass der Vorformling durch Einbringen eines flüssigen Mediums zu einem Behälter ausgeformt wird. Alternativ kann das Ausformen des Vorformlings bis zu einem Behälter zunächst mittels eines Streckblasverfahrens erfolgen und der ausgeformte Behälter anschließend noch in der Form befüllt werden.

So ist aus der DE 10 2011 011 076 A1 ein Verfahren bekannt, bei dem ein Vorformling temporär durch eine horizontale Reckstange während des Ausformens und Füllens geführt wird. Ein ausgeformter und befüllter Behälter wird dann nach einer zweistufigen Ausbringphase bei atmosphärischem Druck oder Umgebungsdruck ausgebracht.

Ferner ist aus der EP 2 930 138 A1 ein Verfahren zur Herstellung eines Kunststoffbehälters sowie zu dessen Befüllung mit einem Füllprodukt umfassend das Einbringen eines Preforms in eine Blasform und das Beaufschlagen des Preforms mit einem Blasmedium zum Herstellen eines Kunststoffbehälters, bekannt, wobei der Innenraum des in der Blasform aufgenommenen Kunststoffbehälters auf einen Unterdruck evakuiert wird und ein unter Überdruck stehendes Füllprodukt in den unter Unterdruck stehenden Innenraum des Kunststoffbehälters eingeleitet wird.

Derzeit verfügbare Formfüllmaschinen bauen relativ groß, da die notwendigen Vorrichtungen zum Ausformen des Behälters und Befüllen entsprechend Platz benötigen. Dies macht es insbesondere bei Ausbildung der Formfüllmaschine als Rundläufermaschine notwendig, Karussells mit großen Radien zu verwenden, was erhebliche Materialbelastungen im Betrieb bedeutet

### Aufgabe

Ausgehend vom bekannten Stand der Technik ist es Aufgabe der vorliegenden Erfindung, eine Formfüllmaschine und ein Verfahren zum Herstellen und Befüllen von Behältern aus Vorformlingen anzugeben, das weniger Platz benötigt und gleichzeitig die Sterilitätsanforderungen an die Behälter erfüllen kann.

### Lösung

Diese Aufgabe wird durch die Formfüllmaschine nach Anspruch 1 und das Verfahren zum Herstellen und Befüllen von Behältern nach Anspruch 9 gelöst. Vorteilhafte Weiterbildungen der Erfindung sind in den Unteransprüchen erfasst.

Die erfindungsgemäße Formfüllmaschine ist dadurch gekennzeichnet, dass die Formfüllstation eine Behandlungseinheit mit wenigstens zwei Behandlungsuntereinheiten umfasst, die in der Behandlungseinheit derart bewegbar angeordnet sind, dass die Behandlungsuntereinheiten abwechselnd über der Behälteröffnung positioniert werden können, wobei die Behandlungseinheit ein Dichtelement umfasst, das so über der Öffnung der Form positioniert werden kann, dass ein gasdichter Raum gebildet wird, der den Innenraum des Vorformlings und/oder des Behälters und die Behandlungsuntereinheiten einschließt. So können mehrere (wenigstens zwei) Behandlungsschritte am Vorformling bzw. Behälter mit den direkt an der Station angeordneten Behandlungsuntereinheiten durchgeführt werden. Es ist somit nicht mehr notwendig, Bereiche an der Formfüllmaschine vorzusehen, die jeweils eine Behandlungseinheit zum Durchführen eines Behandlungsschritts umfassen. Die Größe der gesamten Formfüllmaschine kann so reduziert werden. Weiterhin wird mit dem Dichtelement ein Raum geschaffen, der die Innenseite des Vorformlings und die Behandlungsuntereinheiten vom umgebenden Raum isoliert, was es ermöglicht, die Innenseite des Behälters besser vor Verunreinigungen zu schützen und die gesamte Behandlung des Vorformlings/Behälters nicht nur zeitsparender, sondern gleichzeitig unter kontrollierten Bedingungen durchzuführen.

In einer Ausführungsform umfassen die Behandlungsuntereinheiten wenigstens zwei von einer Blaseinheit, einer Streckeinheit, einer Fülleinheit, einer Verschließereinheit, einer Entkeimungseinheit, einer Vakuumeinheit, einer Streckblaseinheit, einer Formfülleinheit. Unterschiedliche Prozessschritte können so bereits in der Formfüllmaschine durchgeführt werden, was die Anzahl nachfolgender Behandlungsschritte und dafür notwendiger Maschinen reduzieren kann. Bei Streckblaseinheiten handelt es sich um Behandlungsuntereinheiten, die mittels Druckgas (Luft) und einer Streckvorrichtung, wie bekannten Reckstangen, ein Verstrecken des Vorformlings und damit Ausformen des Vorformlings zu einem Behälter ermöglichen. Formfülleinheiten hingegen ermöglichen ein Ausformen des Vorformlings zum Behälter durch Einbringen eines flüssigen Mediums, insbesondere des in den Behälter einzufüllenden Produkts unter Druck.

In einer Ausführungsform umfasst die Behandlungseinheit Düsen zum Beaufschlagen des gasdichten Raumes mit Überdruck und/oder Vakuum. Ein Eindringen kontaminierter Luft oder ähnlichem in den gasdichten Raum kann so vermieden werden.

Es kann ferner vorgesehen sein, dass die Behandlungsuntereinheiten in einer Ebene senkrecht zur Längsachse des Vorformlings in der Form bewegbar angeordnet sind. So können gut kontrollierbare/steuerbare Bewegungsabläufe, wie Rotation oder geradlinige, translatorische Bewegung genutzt werden, um die Behandlungsuntereinheiten entsprechend zu positionieren.

In einer Weiterbildung dieser Ausführungsform können die Behandlungsuntereinheiten um eine Achse parallel zur Längsachse des Vorformlings in der Form rotiert werden und/oder entlang einer senkrecht zur Längsachse des Vorformlings in der Form verlaufenden Bahn translatorisch bewegt werden. Ersteres erlaubt bei Ausbildung der Formfüllmaschine als Rundläufermaschine mit einem Karussell eine Platzersparnis in radialer Richtung während gleichzeitig die Platzanforderungen in Rotationsrichtung gering gehalten werden können. Bei der translatorische Bewegung kann die Behandlungseinheit senkrecht zu der Bahn und der Längsachse des Behälters platzsparend ausgebildet werden.

Es kann ferner vorgesehen sein, dass nicht nur die Behandlungsuntereinheiten sondern die gesamte Behandlungseinheit gegenüber der Form bewegbar angeordnet ist. So kann sie beispielsweise parallel zur Längsachse verschoben werden, um beim Übernehmen des Vorformlings in die Form oder bei der Übergabe des fertigen Behälters aus der Form Bewegungsspielraum für die Übernahmeeinrichtung zu gewährleisten.

In einer Ausführungsform der Formfüllmaschine ist diese als Rundläufermaschine oder linear arbeitende Maschine ausgebildet. Im Falle einer linear arbeitenden Maschine können für die Ver- und Entsorgung der Behandlungseinheiten mit Vorformlingen und/oder Behältern sog. Mover oder Shuttles zum Einsatz kommen, die unabhängig voneinander im Rahmen eines Langstator-Linearmotor-Systems steuerbar sind. Solche Systeme sind aus dem Stand der Technik hinreichend bekannt.

Das erfindungsgemäße Verfahren zum Herstellen und Befüllen von Behältern mit einer Formfüllmaschine ist dadurch gekennzeichnet, dass wenigstens zwei Behandlungsuntereinheiten einer Behandlungseinheit der Formfüllstation abwechselnd über der Öffnung der Form positioniert werden und in dieser Position jeweils einen Behandlungsschritt am Vorformling und/oder ausgeformten Behälter durchführen, wobei ein Dichtelement über der Öffnung positioniert und durch dieses ein gasdichter Raum gebildet, der wenigstens den Innenraum des Vorformlings in der Form und die Behandlungsuntereinheiten umfasst. Dabei ist unter einem Behandlungsschritt jede gängige Behandlung eines Vorformlings und/oder Behälters zu verstehen, wie beispielsweise das Ausformen, insbesondere Streckblasen oder das Füllen des Behälters und/oder Vorformlings. Ebenfalls fällt darunter das Verschließen oder Sterilisieren des Innenraums des Behälters und/oder Vorformlings. Mit diesem Verfahren können möglichst viele Prozessschritte in eine Formfüllmaschine integriert werden, was die Anzahl der nötigen, nachfolgenden Behandlungsaggregate reduzieren kann und auch die notwendige Zeit zur Herstellung des fertigen, befüllten und verschlossenen Behälters reduziert, was, zusammen mit dem gasdichten Raum, in dem die Behandlung des Vorformlings/Behälters erfolgt, gleichsam das Risiko von Verunreinigung während des Transports zu anderen Maschinen vermindert.

In einer Ausführungsform wird der gasdichte Raum mit Überdruck und/oder Vakuum beaufschlagt. Das Eindringen von unerwünschter, ggf. kontaminierter Luft und insbesondere Staub in diesen Bereich und somit in den Innenraum des Behälters kann so vermieden werden, was die Qualität des Behälters hinsichtlich seiner Sterilität verbessert.

In einer Ausführungsform des Verfahrens werden die Behandlungsuntereinheiten in einer Ebene senkrecht zur Längsachse des Vorformlings in der Form bewegt. Ein Positionieren der Behandlungsuntereinheiten kann so mit möglichst geringem Verfahrweg für die Behandlungsuntereinheiten realisiert werden, was die Behandlungszeit für einen Behälter reduziert und den Durchsatz der Formfüllmaschine erhöhen kann.

In einer Weiterbildung dieser Ausführungsform ist vorgesehen, dass die Behandlungsuntereinheiten um eine Achse parallel zur Längsachse des Vorformlings in der Form rotieren und/oder entlang einer senkrecht zur Längsachse des Vorformlings in der Form verlaufenden Bahn translatorisch bewegt werden. Möglichst kurze Verfahrwege für die Behandlungsuntereinheiten können so bei gleichzeitigem Erzielen einer Platzersparnis realisiert werden.

In einer weiteren Ausführungsform des Verfahrens wird die Behandlungseinheit gegenüber der Form bewegt, während sich ein Vorformling in der Form befindet und/oder an die Form übergeben wird und/oder ein Behälter aus der Form entfernt wird.

### Kurze Beschreibung der Figuren

- Figur 1: schematische Seitenansicht einer erfindungsgemäßen Formfüllmaschine gemäß einer Ausführungsform
- Figur 2a - 2b: schematische Darstellung einer Formfüllstation mit Dichtelement in nicht abdichtender (Fig. 2a) und in abdichtender Position (Fig. 2b)
- Figur 3a - 3c: schematische Draufsicht auf eine Behandlungseinheit mit Behandlungsuntereinheiten gemäß unterschiedlicher Ausführungsformen

### Ausführliche Beschreibung

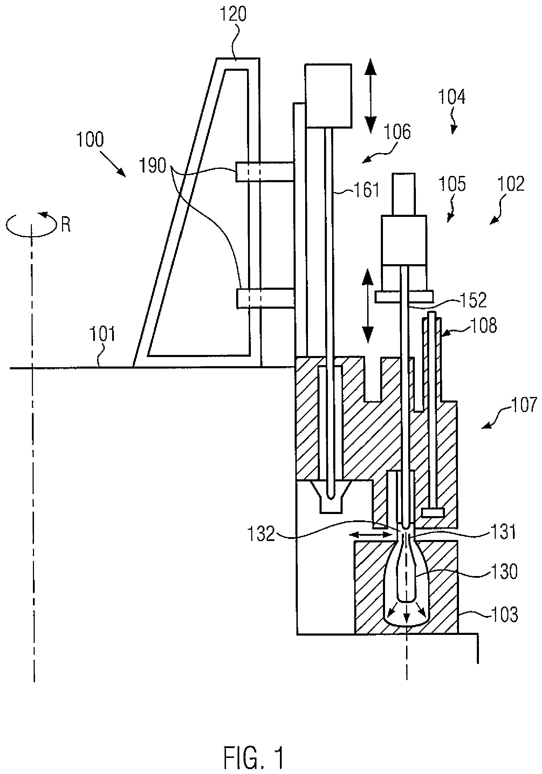

Figur 1 zeigt eine erfindungsgemäße Formfüllmaschine 100 gemäß einer Ausführungsform in Seitenansicht. Die Formfüllmaschine ist in dieser Ausführungsform als Rundläufermaschine ausgebildet und umfasst ein Karussell 101, das um eine Rotationsachse R drehbar ist. An der Peripherie des Karussells sind mehrere Formfüllstationen 102 verteilt, von denen hier exemplarisch eine dargestellt ist. Die Ausbildung der Formfüllmaschine als Rundläufermaschine ist nicht zwingend. So kann diese auch als linear arbeitende Maschine ausgebildet sein. Sämtliche hier beschriebenen Ausführungsformen können auch auf solche Maschinen angewandt werden. Die Darstellung als Rundläufermaschine ist somit nur beispielhaft.

Die Formfüllstation kann über eine Halterung 120 an dem Karussell angebracht sein. Um die Reparatur einer Formfüllstation zu vereinfachen, kann die Verbindung mit dem Karussell über die Halterung lösbar sein. Vorzugsweise ist die Formfüllstation dabei modular ausgebildet und kann als Ganzes zusammen mit der Halterung von der Formfüllmaschine gelöst werden.

Die Formfüllstation 102 umfasst eine Form 103 zur Aufnahme eines Vorformlings 130. Dieser kann in der Form zumindest zu einem Behälter ausgeformt und in der Form befüllt werden. Die Form ist so ausgebildet, dass sie eine Öffnung 132 umfasst, durch die der Öffnungsbereich 131 des Vorformlings 130 in der Form 103 zugänglich ist. Dies bedeutet, dass von außerhalb der Form der Innenraum des Vorformlings 130 in der Form 103 erreichbar ist. Beispielsweise kann Flüssigkeit durch die Öffnung hindurch in den Vorformling eingebracht werden. Die Form kann zweiteilig ausgebildet sein und zur Aufnahme eines Vorformlings geöffnet werden. Nach der Behandlung des Vorformlings kann die Form wieder geöffnet werden und den hergestellten Behälter freigeben.

Die Formfüllstation 102 umfasst weiterhin eine Behandlungseinheit 104, mit der der Vorformling in der Form 103 behandelt werden kann. Insbesondere kann der Vorformling mit der Behandlungseinheit zu einem Behälter ausgeformt und befüllt werden. Die Behandlungseinheit umfasst zu diesem Zweck mehrere, jedoch wenigstens zwei Behandlungsuntereinheiten 105 und 106, von denen jede einen Behandlungsschritt an dem Vorformling 130 und/oder an einem ausgeformten Behälter in der Form 103 vornehmen kann. Hier sind beispielhaft drei Behandlungsuntereinheiten 105, 106, 108 dargestellt.

Die Behandlungsuntereinheiten können dabei vielfältig ausgebildet sein. So kann eine Behandlungsuntereinheit als Blaseinheit zum Streckblasen des Vorformlings zu einem Behälter ausgebildet sein und zu diesem Zweck beispielsweise eine Reckstange umfassen. Diese ist in Figur 1 mit dem Bezugszeichen 161 dargestellt.

Eine weitere Behandlungsuntereinheit kann als Fülleinheit ausgebildet sein. Die Fülleinheit kann, entweder zum Ausformen oder nach Ausformen des Vorformlings zum Behälter, eine Flüssigkeit in den Vorformling/Behälter einfüllen. Dabei kann es sich beispielsweise um das in den Behälter einzufüllende Produkt handeln. Die Fülleinheit umfasst dazu beispielsweise einen Füllstutzen 152 und eine Zuleitung für in den Behälter abzufüllendes Produkt, die beispielsweise durch die Halterung 120 der Formfüllstation hindurch zu einem Produktvorlagebehälter führen kann. Insbesondere kann vorgesehen sein, dass die Fülleinheit als Formfülleinheit ausgebildet ist, mit der der Vorformling durch Einleiten von Produkt vollständig zum Behälter ausgeformt wird. Die Behandlungseinheit kann an der Halterung 120 mittels einer Führung 190 befestigt sein. Insbesondere kann die Behandlungseinheit gegenüber der Halterung 120 mittels der Führung beweglich gelagert sein, um parallel oder senkrecht zur Rotationsachse des Karussells bewegt zu werden.

Weiterhin kann eine Behandlungsuntereinheit auch als Verschließereinheit 108 ausgebildet sein, die auf einen ausgeformten und befüllten Behälter einen Verschluss aufbringen kann. Ferner kann eine Behandlungsuntereinheit als Entkeimungseinheit/Sterilisationseinheit vorgesehen sein, die beispielsweise H₂O₂ oder ein anderes sterilisierendes Gas in den Innenraum des Vorformlings/Behälters einleiten kann.

Alternativ oder zusätzlich dazu kann eine weitere Behandlungsuntereinheit als Vakuumeinheit ausgebildet sein, die den Innenraum des Behälters evakuieren kann. Dabei kann insbesondere vorgesehen sein, dass eine erste Behandlungsuntereinheit das Ausformen des Vorformlings zum Behälter pneumatisch und/oder mechanisch vornimmt (üblicherweise Blasformverfahren oder Streckblasen mit Hilfe einer Reckstange). Anschließend wird durch die Vakuumeinheit der Innenraum des Behälters evakuiert. Dabei muss kein vollständiges Vakuum erzeugt werden, es kann auch ein gegenüber dem Außendruck signifikanter Unterdruck hergestellt werden, beispielsweise 0,1 bar oder 0,01 bar. Anschließend wird der so evakuierte Behälter durch eine weitere Behandlungsuntereinheit, insbesondere einen Füller, mit Produkt befüllt. Dadurch, dass das Produkt in einen evakuierten Behälter eingeleitet wird, kann das Befüllen des Behälters deutlich schneller erfolgen.

Alternativ kann auch vorgesehen sein, dass zunächst ein Vorblasen des Vorformlings mit einem gasförmigen Medium erfolgt, anschließend der Innenraum des vorgeblasenen Behälters evakuiert wird und dann ein hydraulisches Ausformen des Behälters durch Einleitung einer Flüssigkeit, insbesondere des in den Behälter einzufüllende Produkts durchgeführt wird.

Bei all diesen Prozessen kann nach dem Befüllen ein Beaufschlagen des befüllten Behälters mit einem Gas, insbesondere CO₂ erfolgen, sodass ein Überdruck entsteht. So kann beim Befüllen des Behälters mit kohlensäurehaltigen Produkten Schaumbildung oder ein Entweichen der Kohlensäure vermieden werden.

Während erfindungsgemäß vorgesehen ist, dass die Behandlungseinheit wenigstens zwei Behandlungsuntereinheiten umfasst, können auch weitere, beispielsweise drei oder vier Behandlungsuntereinheiten in der Behandlungseinheit vorgesehen sein. Weiterhin können auch andere Behandlungsuntereinheiten als die oben beschriebenen vorgesehen sein.

Es ist erfindungsgemäß vorgesehen, dass die Behandlungsuntereinheiten in der Behandlungseinheit derart bewegbar angeordnet sind, dass die Behandlungsuntereinheiten abwechselnd über der Öffnung 132 positioniert werden können. Dazu können die Behandlungsuntereinheiten beispielsweise in einem Rahmen 107 angeordnet sein, in dem Mittel zum Bewegen der Behandlungsuntereinheiten relativ zur Form 103 vorgesehen sind. So kann beispielsweise ein Antrieb vorgesehen sein, der die Behandlungsuntereinheiten bewegen kann. Bei dem Antrieb kann es sich insbesondere um einen Stellantrieb handeln. Die Behandlungsuntereinheiten können entweder unabhängig voneinander oder miteinander gekoppelt bewegbar sein.

Bevorzugt erfolgt die Bewegung der Behandlungsuntereinheiten dabei in einer Ebene, die senkrecht zur Längsachse L des Vorformlings 130 in der Form 103 verläuft. So können möglichst kurze Verfahrwege für die Behandlungsuntereinheiten realisiert werden und es ist weiterhin nicht notwendig, Mittel zum Bewegen der Behandlungsuntereinheiten in drei Dimensionen bereitzustellen. Unter den Möglichkeiten zur Bewegung der Behandlungsuntereinheiten sind solche bevorzugt, die ausschließlich die Rotation oder eine geradlinige Bewegung (Translation) der Behandlungsuntereinheiten umfassen.

Zusätzlich dazu kann vorgesehen sein, dass die Behandlungseinheit 104 als Ganzes parallel zur Längsachse L des Vorformlings 130 in der Form 103 entsprechend des dargestellten Doppelpfeils bewegt werden kann. Dies kann insbesondere während der Übernahme eines Vorformlings 130 in die Form 103 aus einer Zuführeinrichtung, wie beispielsweise einem Drehstern erfolgen, oder wenn der behandelte Behälter aus der Form 103 an eine weitere Vorrichtung übergeben wird. Jedoch kann auch während der Behandlung des Vorformlings 130 oder des ausgeformten Behälters in der Form 103 ein Bewegen der Behandlungseinheit 104 parallel zur Längsachse des Vorformlings vorgesehen sein.

Während erfindungsgemäß vorgesehen ist, dass die Behandlungsuntereinheiten in einer Ebene senkrecht zur Längsachse L des Vorformlings/Behälters bewegt werden können, kann es vorgesehen sein, dass zumindest Teile einer Behandlungsuntereinheit auch parallel zur Längsachse L des Vorformlings 130, insbesondere in den Vorformling hinein bewegt werden können. Dies steht der Bewegung der Behandlungsuntereinheit als solches nicht entgegen. So kann eine Behandlungsuntereinheit beispielsweise eine Reckstange umfassen, die zum Ausformen des Vorformlings 130 zu einem Behälter in den Vorformling in der Form eingefahren werden muss. Weiterhin kann, bei Ausbildung einer Behandlungsuntereinheit als Fülleinheit, ein Einführen eines Füllstutzens in die Öffnung 132 und insbesondere auch in den Öffnungsbereich 131 des Behälters/Vorformlings notwendig sein, um ein Umherspritzen von Flüssigkeit zu vermeiden.

Ferner ist erfindungsgemäß vorgesehen, dass die Öffnung 132 zusammen mit der Behandlungseinheit einen von der Umgebung abgeschlossenen Raum bildet.

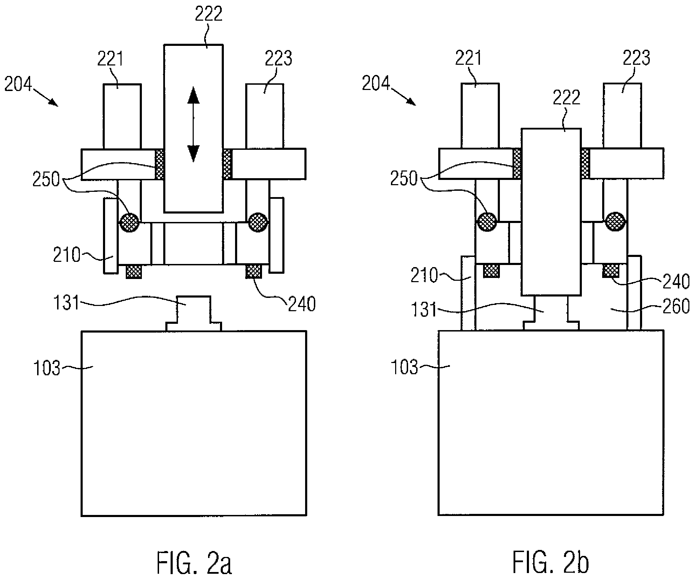

Dazu zeigen Figuren 2a und 2b eine detailliertere Ansicht der Behandlungseinheit 204 mit einem Dichtelement 210 in einem Querschnitt entlang der Längsachse des Vorformlings in der Form 103. Dabei ist in Figur 2a die Anordnung der Behandlungseinheit 204 und des Dichtelements 210 in nicht abdichtender Position und in Figur 2b die Anordnung in abdichtender Position dargestellt. Erstere kann vorzugsweise immer dann eingenommen werden, wenn eine Isolierung des Innenraums des Behälters gegenüber der Umgebung nicht erforderlich ist, beispielsweise nach Verschließen des Behälters. Die abdichtende Position gemäß Figur 2b hingegen wird vorzugsweise unmittelbar nach Übernahme des Vorformlings in die Form 103 eingenommen.

Das Dichtelement 210 kann als Zylindermantel ausgebildet sein, der entlang des dargestellten Doppelpfeils bewegbar ist. Dazu ist das Dichtelement so angeordnet, dass es zusammen mit der Behandlungseinheit 204 und der Form 103 einen Raum einschließen kann, der den Öffnungsbereich 131 des Vorformlings/Behälters und die Behandlungsuntereinheiten 221 bis 223 umschließt. Bei in Längsrichtung des Vorformlings bewegbar ausgebildeten Behandlungsuntereinheiten 221 bis 223 kann vorgesehen sein, dass zusätzlich Dichtelemente 250 eine Abdichtung der Behandlungsuntereinheiten ermöglichen, sodass bei deren Bewegung der isolierte Raum 260 nicht durch eintretende Luft oder Ähnliches verunreinigt wird.

In Figur 2a befindet sich das Dichtelement 210 zunächst in der nicht abdichtenden Position. In dieser Position kann ein Vorformling in die Form 103 eingegeben werden oder aus dieser heraus befördert werden. Von Figur 2a auf Figur 2b wird das Dichtelement 210 dann derart bewegt, dass es mit der Form 103 und der Behandlungseinheit 204 den Raum 260 definiert und diesen gegenüber der Umgebung abschließt. Dabei ist vorgesehen, dass die Behandlungsuntereinheit 222 gegebenenfalls in diesen Raum und/oder in den Vorformling/Behälter hinein verfahren werden können, um beispielsweise den Vorformling/Behälter mit Produkt zu füllen oder zu einem Behälter auszuformen.

Dabei ist vorgesehen, dass das Dichtelement 210 den Raum 260 gasdicht gegenüber der Umgebung abschließen kann. Gasdicht bedeutet hier, dass keine umgebende Luft in den abgedichteten Raum 260 eindringen kann. Dazu kann vorgesehen sein, dass das Dichtelement 210 an den Seiten, die mit der Form 103 in Kontakt kommen, flexible Elemente, beispielsweise aus Gummi, umfasst, um ein vollständiges Abdichten zu erreichen. Die Verbindung zur Behandlungseinheit 204 kann beispielsweise über einen Faltenbalg erreicht werden, sodass auch bei der Bewegung des Dichtelements von der nicht abdichtenden Position in die abdichtende Position und insbesondere in der abdichtenden Position keine Umgebungsluft durch Spalten zwischen dem Dichtelement 210 und der Behandlungseinheit 204 in den Raum 260 eindringen kann.

Weiterhin können Düsen 240 vorgesehen sein, die den Raum 260 mit einem sterilen oder sterilisierenden Gas, beispielsweise H₂O₂ oder Stickstoff füllen können. Dabei kann vorgesehen sein, dass die Düsen 240 einen gegenüber der Umgebung geringfügig erhöhten Druck im Raum 260 erzeugen können, sodass selbst bei nicht perfekter Abdichtung des Raumes 260 gegenüber der Umgebung ein Eindringen von möglicherweise kontaminierter Umgebungsluft aber auch kleinen Flüssigkeitstropfen verhindert werden kann.

Dabei kann es auch vorteilhaft sein, wenn der Vorformling in dem gegenüber der Umgebung isolierten Raum 260 vorgeblasen wird. Dazu kann ein Gas, vorzugsweise ein sterilisierendes Gas, insbesondere H₂O₂ in den Vorformling mittels einer der Behandlungsuntereinheiten unter Druck eingebracht werden, und so das Ausformen des Vorformlings zum Behälter begonnen werden. Das abschließende Ausformen kann dann entweder mit dem abzufüllenden Produkt oder weiterhin mit einem Gas oder anderen Verfahren erfolgen. Durch Verwendung eines sterilisierenden Gases für den Vorblasprozess kann das Sterilisieren des Innenraums des Behälters im selben Behandlungsschritt wie das Vorblasen erfolgen, insbesondere kann dies durch dieselbe Behandlungsuntereinheit bewirkt werden. Damit kann Zeit eingespart und auf eine zusätzliche Sterilisationseinheit verzichtet werden. Ferner ist diese Ausführungsform besonders vorteilhaft mit dem Beaufschlagen des Raums 260 durch die Düsen 240 kombinierbar.

Die Düsen 240 können auch genutzt werden, um gezielt während des Befüllens des Behälters mit Produkt einen Überdruck in dem gasdichten Raum zu erzeugen. Insbesondere beim Befüllen des Behälters mit kohlensäurehaltigen Produkten kann dies genutzt werden, um nach Beendigung des Füllvorgangs die Bildung von Schaum oder das Ausgasen der Kohlensäure aus der Flüssigkeit zu verhindern. Während der gasdichte Raum mit Überdruck beaufschlagt ist, kann der Behälter verschlossen werden, sodass auch der nicht mit Produkt gefüllte Kopfbereich des verschlossenen Behälters weiterhin einen Überdruck aufweist, sodass die Kohlensäure aus dem Produkt nicht entweichen kann. Dazu kann insbesondere CO₂ verwendet werden.

Weiterhin können die Düsen 240 genutzt werden, um nicht nur den Raum 260 mit einem sterilen Gas zu füllen, sondern die Düsen 240 können auch genutzt werden, um vor dem ersten Behandlungsschritt mit einer der Behandlungsuntereinheiten eine Sterilisation und/oder Reinigung (insbesondere mit H₂O₂) des Innenraums des Vorformlings/Behälters in der Form 103 zu bewirken. Da der Innenraum des Vorformlings/Behälters zuvor durch Luft beim Transport in die Formfüllmaschine kontaminiert worden sein kann, kann vorgesehen sein dass wenigstens eine der Düsen gezielt das sterilisierende Gas oder ein Inertgas (beispielsweise N₂) in die Öffnung 131 des Vorformlings einbringen kann. Zu diesem Zweck können eine oder mehrere der Düsen 240 beweglich sein, sodass sie entweder über die Öffnung 131 des Vorformlings/Behälters in der Form 103 verfahren werden und das Gas einbringen können. Alternativ können eine oder mehrere Düsen schwenkbar ausgebildet sein, um Gas in Richtung der Öffnung 131 auszustoßen. Um kontaminierte Luft aus dem Innenraum des Vorformlings zu verdrängen, kann vorteilhaft ein Gas genutzt werden, das eine höhere Dichte als die Luft im Innenraum des Vorformlings besitzt.

Um die Sterilität des Innenraums des Vorformlings während der Behandlung in der Formfüllmaschine zu gewährleisten, ist es bevorzugt, dass während des Ausformens, Befüllens und bis nach dem Verschließen die Abdichtung des Raumes 260 durch das Dichtelement 210 erfolgt. Selbst wenn vorgesehen ist, dass nach dem Verschließen des Behälters weitere Behandlungsschritte am Behälter erfolgen, so ist eine Abdichtung mittels des Dichtelements 210 dann nicht mehr zwingend erforderlich, da der Innenraum des befüllten und verschlossenen Behälters durch den Verschluss bereits vor dem Eindringen der Umgebungsluft isoliert ist. Das Dichtelement 210 kann daher auch vor Beendigung der vollständigen Behandlung des Behälters in der Form 103 wieder in seine nicht abdichtende Position gemäß Figur 2a verfahren werden.

Ferner kann vorgesehen sein, dass die Düsen 240 zur Reinigung des Raums 260 als CIP-Düsen ausgebildet sind oder zusätzliche CIP-Düsen vorgesehen sind, die eine Reinigung des Raums 260 durchführen können. Die Reinigung kann dabei manuell initiiert werden. Alternativ können auch nach einer vorgegebenen Anzahl von Behältern oder nach einer vorgegebenen Zeit automatisch Reinigungszyklen durchgeführt werden. Darüberhinaus kann, immer wenn es zu einer Fehlfunktion, insbesondere zum Platzen eines Behälters in der Form kam, ein Reinigungszyklus durchgeführt werden.

Die Düsen, aber auch eine andere Behandlungsuntereinheit in der Behandlungseinheit können genutzt werden, um gezielt den Öffnungsbereich 131 des Behälters und/oder Vorformlings vor der Behandlung zu entkeimen, um zu verhindern, dass Verunreinigungen im Öffnungsbereich des Behälters und/oder Vorformlings bei der weiteren Behandlung in den Innenraum des Vorformling/Behälters eindringen.

Ferner kann vorgesehen sein, dass die Düsen nicht oder nicht ausschließlich zum Beaufschlagen des Raumes 260 mit einem sterilisierenden Gas ausgebildet sind, sondern dass die Düsen 240 oder andere in dem Raum 260 vorgesehene Düsen ferner ausgebildet sein, in dem Raum 260 einen Unterdruck von 0,1bar, insbesondere 0,01bar, bevorzugt Vakuum zu erzeugen. Das Beaufschlagen mit Unterdruck/Vakuum kann vor dem Befüllen des Behälters mit Produkt erfolgen, um die Zeit, die benötigt wird, um das Produkt in den Behälter einzuleiten, zu reduzieren.

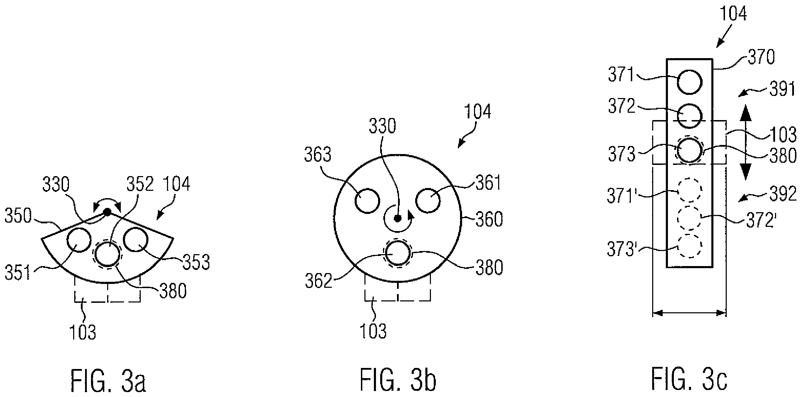

Die Figuren 3a bis 3c zeigen unterschiedliche Ausführungsformen der Behandlungseinheit 104 in einer Draufsicht, parallel zur Längsachse L des Vorformlings gemäß Figur 1. Die Behandlungsuntereinheiten sind hier stark vereinfacht als Kreise dargestellt. Dies ist nicht als beschränkend für die Form der Behandlungsuntereinheiten zu verstehen, sondern dient vielmehr Anschauungszwecken. In den Figuren 3a bis 3c sind ferner nicht die vollständigen Behandlungsuntereinheiten, sondern lediglich der Teil der Behandlungsuntereinheiten im Rahmen 350, 360 bzw. 370 dargestellt.

Für die nachfolgende Beschreibung der Bewegung der Behandlungsuntereinheiten ist es bevorzugt, wenn deren Bewegung derart erfolgen kann, dass die in dem gasdichten Raum geschaffene Atmosphäre nicht beeinträchtigt wird. Dies bedeutet insbesondere, dass kein Verlust an Überdruck oder eine Verschlechterung des in dem gasdichten Raum erzeugten Unterdrucks/Vakuums durch Bewegen der Behandlungsuntereinheiten bewirkt wird. Dies kann gewährleistet werden, indem die Behandlungseinheit mit den darin angeordneten Behandlungsuntereinheiten als Ganzes ebenfalls von der Umgebung abgetrennt/isoliert ist. Dies kann durch den Rahmen der Behandlungseinheit, der als abgeschlossenes Gehäuse ausgebildet sein kann, bewirkt werden. Eine Bewegung der Behandlungsuntereinheiten innerhalb des Rahmens der Behandlungseinheit führt somit nicht zu einer Beeinträchtigung der in dem gasdichten Raum erzeugten Atmosphäre.

In Figur 3a ist der Rahmen 350, in dem die Behandlungsuntereinheiten 351 bis 353 angeordnet sind, als Kreissegment/Zylindersegment ausgebildet. Der Rahmen 350 ist um eine Achse 330 entlang des dargestellten Doppelpfeils drehbar gelagert. Die Behandlungsuntereinheiten 351, 352, 353 sind in dem Rahmen 350 beispielsweise äquidistant in azimutaler Richtung zueinander angeordnet. Auch andere Verteilungen der Behandlungsuntereinheiten in azimutaler Richtung sind denkbar. Die Achse verläuft parallel zur nicht dargestellten Längsachse L des Vorformlings/Behälters in der Form 103.

Während des Betriebs der Formfüllmaschine werden abwechselnd Behandlungsuntereinheiten über der Öffnung 380 der Form 103 positioniert und führen in dieser Position einen Behandlungsschritt am Vorformling/Behälter in der Form 103 aus. So kann eine der Behandlungsuntereinheiten den Vorformling zu einem Behälter ausformen, während eine andere Behandlungsuntereinheit Produkt in den Behälter einfüllt. Eine weitere Behandlungsuntereinheit kann einen Behälter in der Form 103 verschließen. Dabei erfolgt die Bewegung des Rahmens 350 mit den Behandlungsuntereinheiten um die Achse 330 vorzugsweise derart, dass während der Behandlung eines Vorformlings eine Bewegung ausschließlich in eine Rotationsrichtung erfolgt, also entweder im mathematisch positiven oder negativen Sinn. So kann ein unnötig zeitaufwändiges Verfahren des Rahmens 350 vermieden werden.

Um dies zu realisieren, sind die einzelnen Behandlungsuntereinheiten in dem Rahmen derart angeordnet, dass sie entsprechend der während der Behandlung des Vorformlings/Behälters notwendigen Reihenfolge der Prozessschritte in Rotationsrichtung nacheinander angeordnet sind.

Als vereinfachtes Beispiel sei angenommen, dass mit den Behandlungsuntereinheiten ein Ausformen eines Vorformlings zu einem Behälter mittels eines Blasformverfahrens, ein anschließendes Befüllen und ein darauf folgendes Verschließen des Behälters in der Form 103 erfolgt. Ferner wird angenommen, dass die Rotation des Rahmens mit den Behandlungsuntereinheiten im mathematisch positiven Sinn erfolgt. Aus diesen Anforderungen ergibt sich, dass die Behandlungsuntereinheit 353 eine Blaseinheit ist, die den Vorformling zu einem Behälter unter Anwendung eines Blasformverfahrens ausformen kann. Die Behandlungsuntereinheit 352 ist eine Fülleinheit, die den ausgeformten Behälter befüllt. Die Behandlungsuntereinheit 351 schließlich ist eine Verschließereinheit, die den ausgeformten und befüllten Behälter verschließen kann.

Der Rahmen 350 wird also von einer Anfangsposition, in der die Behandlungsuntereinheit 353 über der Öffnung 380 der Form 103 positioniert ist, über eine Zwischenposition, in der die Behandlungsuntereinheit 352 über der Öffnung 380 positioniert wird, in eine Endposition, in der die Behandlungsuntereinheit 351 über der Öffnung 380 positioniert ist, verfahren. Ist die entsprechende Behandlungsuntereinheit in der Position über der Öffnung 380, führt diese den entsprechenden Behandlungsschritt am Vorformling/Behälter in der Form 103 durch. Nachdem diese drei Behandlungsschritte abgeschlossen sind, wird der Rahmen mit den Behandlungsuntereinheiten wieder in die Ausgangsposition verfahren, um die Behandlung eines weiteren Vorformlings zu ermöglichen.

Es kann hier auch vorgesehen sein, dass in Rotationsrichtung des Rahmens 350 während der Behandlung eines Vorformlings/Behälters nach der Form 103 spezielle Reinigungseinrichtungen angeordnet sind, die die Behandlungsuntereinheiten 351 bis 353 gegebenenfalls reinigen können. Solche Reinigungseinrichtungen müssen nicht für jede der Behandlungsuntereinheiten vorgesehen sein. Sie können insbesondere für solche Behandlungsuntereinheiten, die mit Flüssigkeit, wie Produkt, während der Durchführung des Behandlungsschritts kontaminiert werden, eine Reinigungseinrichtung vorgesehen sein, um diese vor Verwendung bei der Behandlung des nächsten Vorformlings/Behälters zu reinigen. Auch ist eine zyklische Reinigung in bestimmten Zeitabständen oder nach einer bestimmten Anzahl behandelter Behälter denkbar.

Figur 3b zeigt eine weitere Ausführungsform, bei der der Rahmen 360, umfassend die Behandlungsuntereinheiten 361 bis 363, als Zylinder ausgebildet ist. In dieser Ausführungsform ist der Rahmen 360 mit den Behandlungsuntereinheiten vollständig um die Rotationsachse 330 drehbar ausgebildet. Notwendige Zuleitungen für die Behandlungsuntereinheiten 361 bis 363 können mit Drehverteilern verbunden sein, sodass eine Drehung des Rahmens 360 ungehindert erfolgen kann. Im Gegensatz zur Ausführungsform gemäß Figur 3a kann in der Ausführungsform gemäß Figur 3b vorgesehen sein, dass kein Zurückdrehen des Rahmens 360 mit den Behandlungsuntereinheiten nach Beendigung der Behandlung des Behälters in der Form 103 erfolgt. Die Bewegung des Rahmens erfolgt also nur in eine Richtung.

In der Ausführungsform gemäß Figur 3b ist es vorteilhaft, wenn nach Durchführung des letzten Prozessschritts, beispielsweise mit der Behandlungsuntereinheit 363, der Rahmen 360 weiter gedreht wird, um den ersten Behandlungsschritt des nachfolgenden Vorformlings/Behälters mit der in Rotationsrichtung folgenden, ersten Behandlungsuntereinheit 361 durchzuführen.

Verglichen mit der Ausführungsform gemäß Figur 3a benötigt diese Ausführungsform zwar mehr Platz, jedoch werden die Zeiten zum Positionieren der Behandlungsuntereinheiten nach Abschließen der Behandlung eines ersten Behälters und vor Behandeln des nachfolgenden Behälters reduziert.

Während es vorteilhaft ist, wenn die Behandlungsuntereinheiten gemäß den Ausführungsformen in Figur 3a und Figur 3b fest mit dem Rahmen 360 verbunden sind, kann insbesondere in der Ausführungsform gemäß Figur 3b vorgesehen sein, dass die Behandlungsuntereinheiten 361 bis 363 relativ zum Rahmen 360 bewegbar angeordnet sind. Der Rahmen 360 kann dann lediglich zur Führung der Behandlungsuntereinheiten 361 bis 363 dienen. Weiterhin können die Behandlungsuntereinheiten auch unabhängig voneinander bewegbar sein. Dazu kann jeder Behandlungsuntereinheit ein Antrieb zugeordnet sein.

Sind die Behandlungsuntereinheiten im Rahmen 360 fest verortet, können zusätzliche Komponenten der Behandlungsuntereinheiten, wie beispielsweise Steuerungen oder Antriebe, im Rahmen 360 vorgesehen sein. Die Platzanforderungen für die gesamte Behandlungseinheit 104 können so reduziert werden.

In Figur 3c ist eine weitere Ausführungsform der Behandlungseinheit 104 dargestellt. In dieser Ausführungsform erfolgt keine Rotation der Behandlungsuntereinheiten 371 bis 373. Vielmehr werden die Behandlungsuntereinheiten 371 bis 373 translatorisch, insbesondere geradlinig entlang des dargestellten Doppelpfeils, relativ zur Form 103 bewegt.

Dabei ist der Rahmen 370 fiktiv in einen Behandlungsbereich 391 und einen Nachbehandlungsbereich 392 eingeteilt. Die Behandlungsuntereinheiten 371 bis 373 sind in dieser Ausführungsform relativ zum Rahmen 370 bewegbar angeordnet, sodass sie von dem Behandlungsbereich 391 aus über die Öffnung 380 des Behälters/Vorformlings in der Form 103 positioniert und anschließend in den Nachbehandlungsbereich 392 verfahren werden können. Alternativ kann auch der gesamte Rahmen 370 mit den Behandlungsuntereinheiten 371 bis 373 entsprechend bewegbar sein.

In der Ausführungsform gemäß Figur 3c sind die Behandlungsuntereinheiten 371 bis 373 derart angeordnet, dass in Bewegungsrichtung der Behandlungsuntereinheiten bzw. des Rahmens 370 die Behandlungsuntereinheit entsprechend des ersten Behandlungsschritts für einen in die Form aufgenommenen Vorformling/Behälter vor der Behandlungsuntereinheit für den zweiten Behandlungsschritt und diese vor der Behandlungsuntereinheit für den dritten Behandlungsschritt und so fort angeordnet sind. Somit kann nach Beendigung der Behandlung eines Vorformlings/Behälters in der Form 103 ein Vorbeiführen einzelner Behandlungsuntereinheiten an anderen Behandlungsuntereinheiten, um diese wieder in die Ausgangsposition zurückzuführen, unterbleiben.

Die Bewegung der Behandlungsuntereinheiten, entweder mit dem Rahmen 370 zusammen oder in dem Rahmen, erfolgt dabei wie folgt: zunächst wird die erste Behandlungsuntereinheit 373 über der Öffnung 380 der Form 103 positioniert und führt den ersten Behandlungsschritt am Vorformling/Behälter in der Form 103 durch (beispielsweise Ausformen des Vorformlings zum Behälter). Anschließend wird die Behandlungsuntereinheit 373 in ihre Nachbehandlungsposition 373' (hier gestrichelt dargestellt) bewegt. Schon währenddessen kann die Behandlungsuntereinheit 372 über der Öffnung 380 positioniert werden und den zweiten Behandlungsschritt durchführen. Anschließend wird auch diese in ihre Nachbehandlungsposition 372' bewegt. Währenddessen oder danach kann die dritte Behandlungsuntereinheit 371 über der Öffnung 380 positioniert werden und den dritten Behandlungsschritt durchführen. Anschließend wird auch diese in ihre Nachbehandlungsposition 371' bewegt.

Anschließend werden die Behandlungsuntereinheiten 371 bis 373 in umgekehrter Reihenfolge in ihre Ausgangspositionen im Behandlungsbereich 391 verfahren. Dies bedeutet, dass die dritte Behandlungseinheit 371 aus ihrer Nachbehandlungsposition 371' wieder in die ursprünglich dargestellte Position verfahren wird. Anschließend oder gleichzeitig wird die zweite Behandlungsuntereinheit aus der Position 372' in die ursprüngliche Position verfahren und anschließend oder gleichzeitig die erste Behandlungsuntereinheit 373 aus der Nachbehandlungsposition 373' in die ursprüngliche Position bewegt.

Auch in der Ausführungsform gemäß Figur 3c können im Nachbehandlungsbereich 392 Reinigungseinrichtungen für eine oder mehrere der Behandlungsuntereinheiten vorgesehen sein, die eine Reinigung der entsprechenden Behandlungsuntereinheit in ihrer Nachbehandlungsposition ermöglichen.

Insbesondere bei der Ausführungsform gemäß Figur 3c kann vorgesehen sein, dass der Durchmesser des Rahmens 370 und vorzugsweise der gesamten Behandlungseinheit kleiner als der Durchmesser d der Form 103 ist. Bei der Ausführungsform der Formfüllmaschine als Rundläufer erstreckt sich der Durchmesser d der Form 103 dabei in Rotationsrichtung. Damit wird erreicht, dass der begrenzende Faktor für die Anzahl der Formfüllstationen entlang des Umfangs des Karussells der Formfüllmaschine die Größe, insbesondere der Durchmesser der Formen ist. Gegenüber üblichen Formfüllmaschinen wird somit erreicht, dass zugunsten der effektiveren Prozessführung die Anzahl der Formen nicht reduziert werden muss.

## Patentansprüche

1. Formfüllmaschine (100) zum Herstellen und Befüllen von Behältern aus Vorformlingen, umfassend eine Formfüllstation (102) mit einer Form (103) zum Aufnehmen eines Vorformlings, wobei die Form eine Öffnung (132) aufweist, sodass ein Öffnungsbereich (131) des Vorformlings in der Form zugänglich ist, wobei
die Formfüllstation (102) eine Behandlungseinheit (104) mit wenigstens zwei Behandlungsuntereinheiten (105, 106) umfasst, die **gekennzeichnet sind, dadurch** dass die wenigstens zwei Behandlungsuntereinheiten in der Behandlungseinheit (104) derart bewegbar angeordnet sind, dass die Behandlungsuntereinheiten (105, 106) abwechselnd über der Öffnung (132) positioniert werden können und die Behandlungseinheit (104) ein Dichtelement (210) umfasst, das so über der Öffnung (132) der Form positioniert werden kann, dass ein gasdichter Raum (260) gebildet wird, der den Innenraum des Vorformlings und/oder Behälters und die Behandlungsuntereinheiten (221, 222, 223) einschließt.

2. Formfüllmaschine (100) nach Anspruch 1, wobei die Behandlungsuntereinheiten (105, 106) wenigstens zwei von einer Blaseinheit, einer Streckeinheit, einer Streckblaseinheit, einer Fülleinheit, einer Formfülleinheit, einer Verschließereinheit, einer Entkeimungseinheit, einer Vakuumeinheit umfassen.

3. Formfüllmaschine (100) nach Anspruch 2, wobei die Behandlungseinheit (104) Düsen (240) zum Beaufschlagen des gasdichten Raumes (260) mit Überdruck und/oder Vakuum umfasst.

4. Formfüllmaschine (100) nach einem der Ansprüche 1 bis 3, wobei die Behandlungsuntereinheiten (105, 106) in einer Ebene quer zur Längsachse des Vorformlings in der Form (103) bewegbar angeordnet sind.

5. Formfüllmaschine (100) nach Anspruch 4, wobei die Behandlungsuntereinheiten (105, 106) um eine zur Längsachse des Vorformlings in der Form (103) parallele Achse (330) rotiert werden können und/oder wobei die Behandlungsuntereinheiten (105, 106) entlang einer quer zur Längsachse eines Vorformlings in der Form verlaufenden Bahn translatorisch bewegt werden können.

6. Formfüllmaschine (100) nach einem der Ansprüche 1 bis 5, wobei die Behandlungseinheit (104) gegenüber der Form (103) bewegbar angeordnet ist.

7. Formfüllmaschine (100) nach einem der Ansprüche 1 bis 6, wobei die Formfüllmaschine als Rundläufermaschine oder linear arbeitende Maschine ausgebildet ist.

8. Verfahren zum Herstellen und Befüllen von Behältern mit einer Formfüllmaschine (100), wobei ein Vorformling (130) in eine Form (103) einer Formfüllstation (102) eingebracht wird und der Öffnungsbereich (131) des Vorformlings durch eine Öffnung (132) der Form zugänglich ist, **dadurch gekennzeichnet, dass** wenigstens zwei Behandlungsuntereinheiten (105, 106) einer Behandlungseinheit (104) der Formfüllstation abwechselnd über der Öffnung (132) der Form positioniert werden und in dieser Position einen Behandlungsschritt am Vorformling und/oder ausgeformten Behältern durchführen und wobei ein Dichtelement (210) über der Öffnung positioniert und durch das Dichtelement (210) ein gasdichter Raum (260) gebildet wird, der wenigstens den Innenraum des Vorformlings in der Form und die Behandlungsuntereinheiten (221, 222, 223) umfasst.

9. Verfahren nach Anspruch 8, wobei der gasdichte Raum (260) mit Überdruck und/oder Vakuum beaufschlagt wird.

10. Verfahren nach Anspruch 8 oder 9, wobei die Behandlungsuntereinheiten (105, 106) in einer Ebene quer zur Längsachse des Vorformlings in der Form bewegt werden.

11. Verfahren nach Anspruch 10, wobei die Behandlungsuntereinheiten (105, 106) um eine zur Längsachse des Vorformlings in der Form (103) parallele Achse (330) rotieren und/oder entlang einer quer zur Längsachse des Vorformlings in der Form verlaufenden Bahn translatorisch bewegt werden.

12. Verfahren nach Anspruch 8, wobei die Behandlungseinheit (104) gegenüber der Form bewegt wird, während sich ein Vorformling in der Form (103) befindet und/oder an die Form übergeben wird und/oder ein Behälter aus der Form entfernt wird.

## Claims

1. A mould-filling machine (100) for producing and filling containers from preforms, comprising a mould-filling station (102) having a mould (103) for receiving a preform, the mould having an opening (132) such that an opening region (131) of the preform in the mould is accessible, wherein the mould filling station (102) comprises a processing unit (104) with at least two processing subunits (105, 106), which are **characterized in that** the at least two processing subunits are movably arranged in the processing unit (104) so that the processing subunits (105, 106) can be alternately positioned above the opening (132), and the processing unit (104) comprises a sealing element (210) which can be positioned above the opening (132) of the mould so as to form a gas-tight space (260) enclosing the interior of the preform and/or of the container as well as the processing subunits (221, 222, 223).

2. The mould-filling machine (100) according to claim 1, wherein the processing subunits (105, 106) comprise at least two of a blowing unit, a stretching unit, a stretch blowing unit, a filling unit, a mould-filling unit, a closing unit, a sterilizing unit and a vacuum unit.

3. The mould filling machine (100) according to claim 2, wherein the processing unit (104) comprises nozzles (240) for applying positive pressure and/or vacuum to the gas-tight space (260).

4. The mould filling machine (100) according to any one of claims 1 to 3, wherein the processing subunits (105, 106) are arranged movably in a plane transverse to the longitudinal axis of the preform in the mould (103).

5. The mould filling machine (100) according to claim 4, wherein the processing subunits (105, 106) can be rotated about an axis (330) parallel to the longitudinal axis of the preform in the mould (103) and/or wherein the processing subunits (105, 106) can be moved in translation along a path extending transversely to the longitudinal axis of a preform in the mould.

6. The mould filling machine (100) according to one of claims 1 to 5, wherein the processing unit (104) is arranged so as to be movable relative to the mould (103).

7. The mould filling machine (100) according to one of claims 1 to 6, wherein the mould filling machine is designed as a rotary machine or a linear machine.

8. A method for producing and filling containers with a mould-filling machine (100), wherein a preform (130) is placed in a mould (103) of a mould-filling station (102) and the opening region (131) of the preform is accessible through an opening (132) of the mould, **characterised in that** at least two processing subunits (105, 106) of a processing unit (104) of the mould-filling station are alternately positioned above the opening (132) of the mould and in this position perform a processing step on the preform and/or moulded containers, and wherein a sealing element (210) is positioned above the opening and a gas-tight space (260) is formed by the sealing element (210) comprising at least the interior of the preform in the mould and the processing subunits (221, 222, 223).

9. The method according to claim 8, wherein the gas-tight space (260) is subjected to positive pressure and/or vacuum.

10. The method according to claim 8 or 9, wherein the processing subunits (105, 106) are moved in a plane transverse to the longitudinal axis of the preform in the mould.

11. The method according to claim 10, wherein the processing subunits (105, 106) rotate about an axis (330) parallel to the longitudinal axis of the preform in the mould (103) and/or are moved in translation along a path extending transversely to the longitudinal axis of the preform in the mould.

12. The method according to claim 8, wherein the processing unit (104) is moved relative to the mould while a preform is arranged in the mould (103) and/or is transferred to the mould and/or a container is removed from the mould.

## Revendications

1. Machine de formage-remplissage (100) pour la fabrication et le remplissage de récipients à partir de préformes, comprenant une station de formage-remplissage (102) avec un moule (103) pour la réception d'une préforme, le moule présentant une ouverture (132) de telle sorte qu'une zone d'ouverture (131) de la préforme dans le moule est accessible, la station de formage-remplissage (102) comprenant une unité de traitement (104) avec au moins deux sous-unités de traitement (105, 106) qui sont **caractérisées en ce que** les au moins deux sous-unités de traitement sont disposées de manière mobile dans l'unité de traitement (104) de telle sorte que les sous-unités de traitement (105, 106) peuvent être positionnées alternativement au-dessus de l'ouverture (132) et l'unité de traitement (104) comprend un élément d'étanchéité (210) qui peut être positionné au-dessus de l'ouverture (132) du moule de telle sorte qu'un espace étanche aux gaz (260) est formé qui entoure l'intérieur de la paraison et/ou du récipient et les sous-unités de traitement (221, 222, 223).

2. Machine de formage-remplissage (100) selon la revendication 1, dans laquelle les sous-unités de traitement (105, 106) comprennent au moins deux unités parmi une unité de soufflage, une unité d'étirage, une unité d'étirage-soufflage, une unité de remplissage, une unité de formage-remplissage, une unité de capsulage, une unité de stérilisation, une unité de dépression.

3. Machine de formage-remplissage (100) selon la revendication 2, dans laquelle l'unité de traitement (104) comprend des buses (240) pour appliquer une pression positive et/ou une dépression à la chambre étanche aux gaz (260).

4. Machine de formage-remplissage (100) selon l'une quelconque des revendications 1 à 3, dans laquelle les sous-unités de traitement (105, 106) sont disposées de manière mobile dans le moule (103) dans un plan transversal à l'axe longitudinal de la préforme.

5. Machine de remplissage de moule (100) selon la revendication 4, dans laquelle les unités de traitement (105, 106) peuvent être tournées autour d'un axe (330) parallèle à l'axe longitudinal de la préforme dans le moule (103) et/ou dans laquelle les unités de traitement (105, 106) peuvent être déplacées en translation le long d'une trajectoire s'étendant transversalement à l'axe longitudinal d'une préforme dans le moule.

6. Machine de formage-remplissage (100) selon l'une des revendications 1 à 5, dans laquelle l'unité de traitement (104) est disposée de manière à être mobile par rapport au moule (103).

7. Machine de formage-remplissage (100) selon l'une des revendications 1 à 6, dans laquelle la machine de formage-remplissage est conçue comme une machine rotative ou une machine à fonctionnement linéaire.

8. Procédé de fabrication et de remplissage de récipients avec une machine de formage-remplissage (100), dans lequel une préforme (130) est placée dans un moule (103) d'un poste de formage-remplissage (102) et la zone d'ouverture (131) de la préforme est accessible par une ouverture (132) du moule, **caractérisé en ce qu'**au moins deux sous-unités de traitement (105, 106) d'une unité de traitement (104) de la station de formage-remplissage sont positionnés alternativement au-dessus de l'ouverture (132) du moule et, dans cette position, effectuent une étape de traitement sur la paraison et/ou les récipients moulés, et dans lequel un élément d'étanchéité (210) est positionné au-dessus de l'ouverture et un espace étanche aux gaz (260) est formé par l'élément d'étanchéité (210), lequel espace comprend au moins l'espace intérieur de la paraison dans le moule et les sous-unités de traitement (221, 222, 223).

9. Procédé selon la revendication 8, dans laquelle l'espace étanche au gaz (260) est soumis à une surpression et/ou à une dépression.

10. Procédé selon les revendications 8 ou 9, dans lequel les sous-unités de traitement (105, 106) sont déplacées dans un plan transversal à l'axe longitudinal de la préforme dans le moule.

11. Procédé selon la revendication 10, dans lequel les sous-unités de traitement (105, 106) sont tournées autour d'un axe (330) parallèle à l'axe longitudinal de la préforme dans le moule (103) et/ou sont déplacées en translation le long d'une trajectoire s'étendant transversalement à l'axe longitudinal de la préforme dans le moule.

12. Procédé selon la revendication 8, dans lequel l'unité de traitement (104) est déplacée par rapport au moule tandis qu'une paraison se trouve dans le moule (103) et/ou est transférée dans le moule et/ou un récipient est retiré du moule.
